# EUROPÄISCHE PATENTANMELDUNG

(11) **EP 2 239 165 A2**
(43) Veröffentlichungstag der Anmeldung: **13.10.2010**
(21) Anmeldenummer: 10466005.5
(22) Anmeldetag: 26.01.2010
(51) Int. Cl.: B60R 5/04

(54) **Kofferraumabdeckrollo**

(30) Priorität: 29.01.2009 CZ 20090048
(71) Anmelder: Skoda Auto A.S., 293 60 Mladá Boleslav (CZ)
(72) Erfinder: Kraus, Ladislav, 51236 Horni Branná (CZ)

(57) **Zusammenfassung**

Kofferraumabdeckrollo bestehend aus einem Rollo (2) mit einem festen Endglied (5), das eine Querstange (6) aufweist, auf deren Enden sich Gleitsteine (7) befinden, die gleitend in Längsführungsleisten (8) geführt werden. Jede Längsführungsleiste (8) weist ein Einrastelement (10) auf, das mit einem Linearmotor (13) verbunden ist. Nach der Öffnung der Heckklappe wird der Linearmotor (13) aktiviert, wodurch das Rollo (2) entrastet und in eine Stellung verschoben wird, die einen leichten Zugang zum Fahrzeugkofferraum (1) ermöglicht.

## Beschreibung

### Technisches Gebiet

Die Erfindung betrifft ein Kofferraumabdeckrollo, insbesondere dann den Mechanismus zu seiner elektromechanischen Entrastung.

### Bisheriger Stand der Technik

Derzeit werden zur Abdeckung des Kofferraumes insbesondere bei Fahrzeugen in der Kombiausführung die Abdeckrollos eingesetzt, deren Zweck die Schaffung einer ästhetisch ansehnlichen Abdeckung ist, die einen unerwünschten Einblick in den Fahrzeugkofferraum verhindert. Das Rollo ist auf einer Welle aufgerollt, welche in einem in der Regel hinter den Hintersitzen befestigten Gehäuse angeordnet ist. Das freie Ende des Rollos weist ein festes Bauglied auf, in dem eine Querstange gelagert ist, die nach dem Ausziehen des Rollos in die Aussparungen in den Seitenwänden des Kofferraumes eingerastet wird. Zum rückwärtigen Aufrollen in das Gehäuse muss das Rollo nach vorne gezogen werden, damit die Querstange aus den Aussparungen in den Seitenwänden entrastet wird. Die angeführte Lösung wird vorteilhaft weitergeführt, in dem an beiden Seitenwänden des Kofferraumes die Längsnuten angebracht werden, an deren Enden sich Einrastelemente befinden. In den Längsnuten wird die Querstange geführt, die an beiden Seiten Gleitsteine aufweist. Für leichte Handhabung weist der feste Rolloteil einen Entrastsmechanismus auf, der nach der Betätigung des Schalters des Hebels des Entrastmechanismus die Querstange in den Längsnuten an den Seitenwänden entrastet und das Rollo durch die Einwirkung der Rückfeder des Rollmechanismus in die vorgegebene Position verschiebt, eventuell komplett in das Gehäuse aufrollt. Der Nachteil dieser Lösung stellt die Notwendigkeit des Handlings mit dem Entrastmechanismus des Rollo dar, was bei Fahrzeugen der höheren Klasse, eventuell bei Fahrzeugen mit hochwertiger Ausstattung nicht zur deren Imagesteigerung beiträgt.

### Darstellung der Erfindung

Die angeführten Nachteile werden durch das Kofferraumabdeckrollo gemäß der Erfindung gelöst, das ein Rollo mit einem festen Endglied umfasst, welches eine Querstange mit Gleitsteinen an beiden Enden aufweist, die gleitend in den Längsführungsleisten mit Einrastelementen angeordnet sind, wobei die Längsführungsleisten Linearmotoren aufweisen. Die sind über ein Zugglied mit den Einrastelementen verbunden. Die Linearmotoren sind in den Halter an den Längsführungsleisten befestigt und an die Fahrzeugsteuereinheit angeschlossen.

### Übersicht der Abbildungen in den Zeichnungen

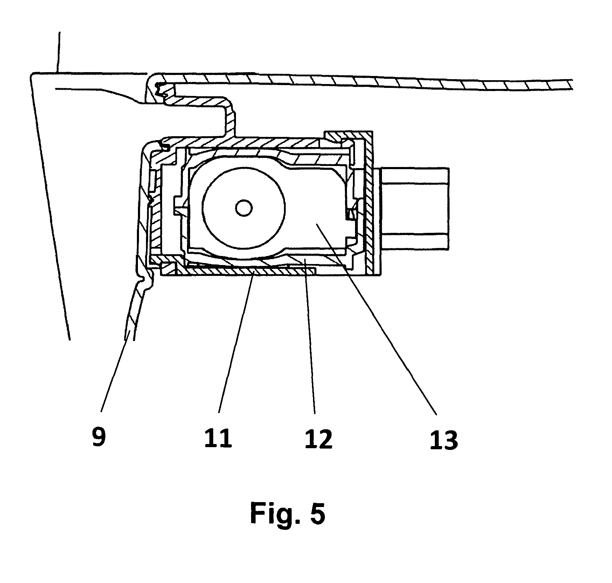

Die Erfindung wird näher anhand der Ausführungsbeispiele gemäß den beigefügten Zeichnungen erläutert, in denen die Fig. 1 eine Axonometrieansicht des Kofferraumes, die Fig. 2 eine Axonometrieansicht der Innenseite der Seitenwand des Kofferraumes, die Fig. 3 einen Teilschnitt der Seitenwand des Kofferraumes mit Linearmotor in der Ruhelage, die Fig. 4 einen Teilschnitt der Seitenwand des Kofferraumes mit Linearmotor in der Arbeitsstellung, die Fig. 5 einen Querschnitt des festen Gehäuses mit angeordnetem Linearmotor darstellt.

### Ausführungsbeispiel der Erfindung

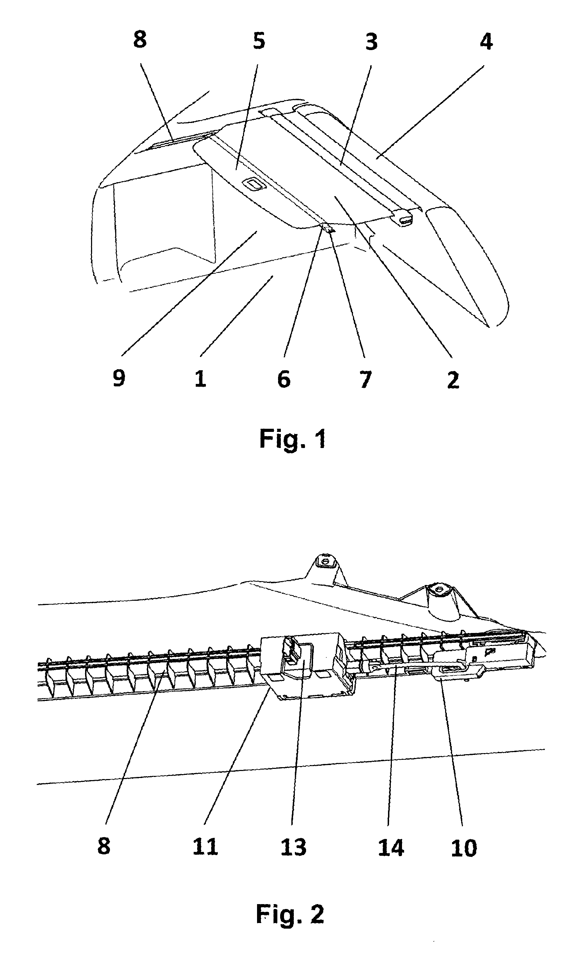

Wie aus der Fig. 1 ersichtlich ist, wird für die Abdeckung des Fahrzeugkofferraumes 1 ein Rollo 2 verwendet, das im Gehäuse 3 aufgerollt ist, das in der Regel hinter den Hintersitzen 4 befestigt ist. Für das Ausziehen in die Funktionsstellung dient das feste Endglied 5, in dem die Querstange 6 gelagert ist, die an beiden Enden die Gleitsteine 7 aufweist. Diese werden gleitend in den Längsführungsleisten 8 geführt, die an den Seitenwänden des Kofferraumes 9 angeordnet sind. Jede der Längsführungsleisten 8 weist am Ende der zur Hecklappe anliegenden Unterkante ein Einrastelement 10 auf. Weiter weist jede Leiste ein festes Gehäuse 11 auf, in dem ein zweiteiliges Dämmglied 12 angeordnet ist, in dem ein Linearmotor 13 gelagert ist. Dieser ist über ein Zugglied 14 mit dem Einrastelement 10 verbunden. Der Linearmotor 13 ist weiter an die Fahrzeugsteuereinheit (nicht abgebildet) angeschlossen.

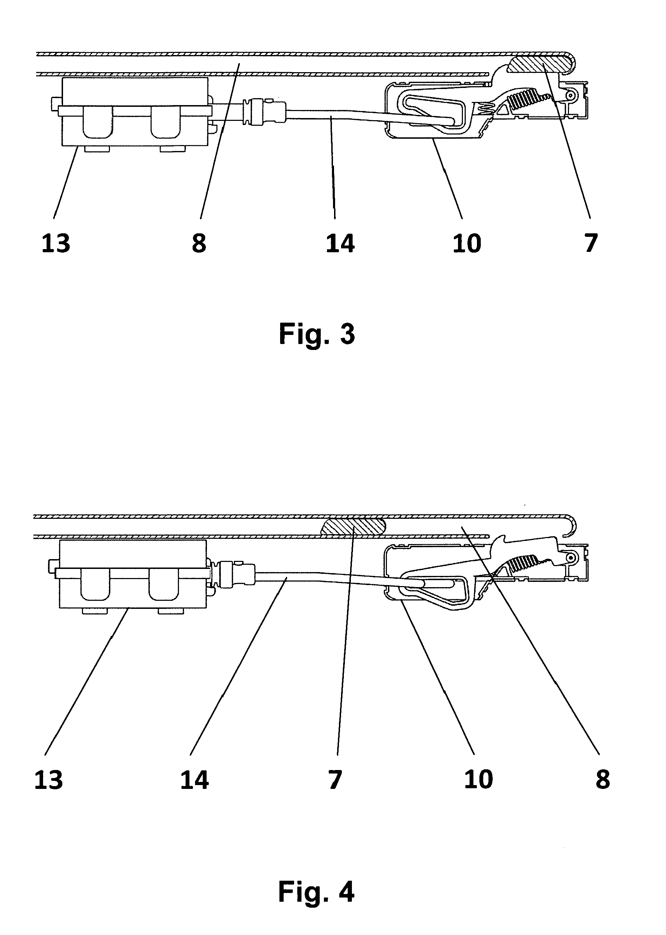

Bei der Öffnung der Heckklappe durch die Knopfbetätigung der Feinbedienung wird die Heckklappe entriegelt und sie springt auf. Gleichzeitig mit der Knopfbetätigung der Feinbedienung der Heckklappe sendet die Fahrzeugsteuereinheit ein Impuls an den Linearmotor 13. Dieser schiebt sich aus der Ruhelage gemäß Fig. 2 in die Arbeitsstellung gemäß Fig. 3. Somit verschiebt sich das Zugglied 14, das mit dem an der Längsführungsleiste 8 angeordnetem Einrastelement 10 verbunden ist, welches die Gleitsteine 7 bzw. die Querstange 6 entrastet und dadurch das Rollo 2 gelöst, das sich in die Stellung verlagert, die einen leichten Zugang ins Fahrzeugkofferraum 1 ermöglicht.

Durch die Implementierung der Linearmotoren 13 wird die ursprüngliche manuelle Rolloentrastung nicht betroffen. Somit kann das Rollo 2 bei geöffneter Heckklappe aufgezogen und nachfolgend wieder nur durch manuelles Andrücken am festen Endglied 5 ohne Nutzung der elektromechanischen Entrastung entrastet werden.

### Bezugszeichenliste

- 1: Fahrzeugkofferraum
- 2: Rollo
- 3: Gehäuse
- 4: Hintersitze
- 5: festes Endglied
- 6: Querstange
- 7: Gleitstein
- 8: Längsführungsleiste
- 9: Seitenwand des Kofferraumes
- 10: Einrastelement
- 11: festes Gehäuse
- 12: Dämmglied
- 13: Linearmotor
- 14: Zugglied

## Patentansprüche

1. Kofferraumabdeckrollo, bestehend aus einem Rollo (1) mit einem festen Endglied (5), das eine Querstange (6) aufweist, die an beiden Enden mit Gleitsteinen (7) ausgeführt ist, welche gleitend in Längsführungsleisten (8) geführt werden, die mit Einrastelementen (10) ausgeführt sind **dadurch gekennzeichnet dass** die Längsführungsleisten (8) Linearmotoren (13) aufweisen, die mittels Zuggleid (14) mit den Einrastelementen (10) verbunden sind.

2. Kofferraumabdeckrollo nach Anspruch 1 **dadurch gekennzeichnet, dass** jede Längsführungsleiste (8) ein festes Gehäuse (11) aufweist, das ein zweiteiliges Dämmglied (12) beinhaltet, in dem ein Linearmotor (13) befestigt ist.

3. Kofferraumabdeckrollo Anspruch 1 **dadurch gekennzeichnet, dass** der Linearmotor (13) an eine Fahrzeugsteuereinheit angeschlossen ist.
